# EUROPEAN PATENT SPECIFICATION

(11) **EP 1 460 825 B1**
(45) Date of publication and mention of the grant of the patent: **20.07.2011**
(21) Application number: 02793372.0
(22) Date of filing: 25.12.2002
(51) Int. Cl.: H04M 3/53, H04M 3/42, H04M 3/56, H04L 12/56

(54) **EXCHANGE SYSTEM AND COMMUNICATION RECORDING METHOD**
AUSTAUSCHSYSTEM UND KOMMUNIKATIONSAUFZEICHNUNGSVERFAHREN
SYSTEME COMMUTATEUR ET PROCEDE D'ENREGISTREMENT DE COMMUNICATIONS

(30) Priority: 27.12.2001 JP 2001397265
(43) Date of publication of application: 22.09.2004
(73) Proprietor: Panasonic Corporation, Kadoma-shi Osaka 571-8501 (JP)
(72) Inventor: TAKESHITA, Sachiko, Suginami-ku, Tokyo 166-0016 (JP); MORITA, Junichi, Hachioji-shi, Tokyo 193-0823 (JP); AMISHIMA, Maki, Kamakura-shi, Kanagawa 247-0065 (JP); URANAKA, Hiroshi, Bunkyo-ku, Tokyo 113-0021 (JP); NAKANO, Gou, Shibuya-ku, Tokyo 151-0073 (JP)
(74) Representative: Grünecker, Kinkeldey, Stockmair & Schwanhäusser Anwaltssozietät
(86) International application number: PCT/JP2002/013496
(87) International publication number: WO 2003/056798

(56) References cited:
- EP-A- 0 453 128
- EP-A- 1 111 892
- JP-A- 10 154 980
- JP-A- 10 224 476
- JP-A- 2000 201 237
- JP-A- 2000 286 899
- JP-A- 2001 352 349
- JP-A- 2003 046 646
- US-A1- 2001 052 081

## Description

### Technical Field

The present invention relates to a switching system which switches voice communications carried out between communication terminals through the Internet and LAN, etc., and a call recording method for recording the contents of a call, and more particularly, to a switching system capable of recording a call without causing any reception delay of voice data.

### Background Art

In recent years, the Internet is becoming accessible from not only a personal computer but also a home device such as a telephone terminal, and the Internet is thereby becoming widespread at an accelerating pace.

The Internet has been conventionally used as a network for transmitting/receiving character information and image information, but recently great attention is being focused on an Internet telephone which transmits voice information using the Internet. This is because the Internet telephone is not constrained by a conventional system of billing in proportion to distance and has advantages such as the ability to communicate with people overseas at a low price.

However, while the telephone network is a network dedicated to voice data transmission, an IP (Internet Protocol) network transmits not only voice data but also other data and a conversation between telephone terminals through the IP network may become unnatural due to a transmission delay of the voice data. For this reason, it is necessary to avoid reception delays of voice data so that voice data of a call can be transmitted in real time.

Furthermore, conventional offices introduce a PBX (Private Branch Exchange) to realize various telephone services using a telephone network. Thus, when an IP network is used, the IP network is required to realize various telephone services covered by the PBX so far.

One of services of the PBX is call recording. In conventional call recording, voice data of a call between telephone terminals in communication is recorded in an external storage medium in the PBX or connected to the PBX.

On the other hand, a system of call recording using an Internet telephone is disclosed in the Unexamined Japanese Patent Publication No.2000-201237. In this system, an Internet telephone apparatus connected to an IP network and PSTN (Public Switched Telephone Network) network sends downlink voice data sent from the IP network to the PSTN network, sends uplink voice data sent from the PSTN network to the IP network, combines the downlink voice data sent from the IP network and the uplink voice data sent from the PSTN network and stores the voice data in a call recording apparatus.

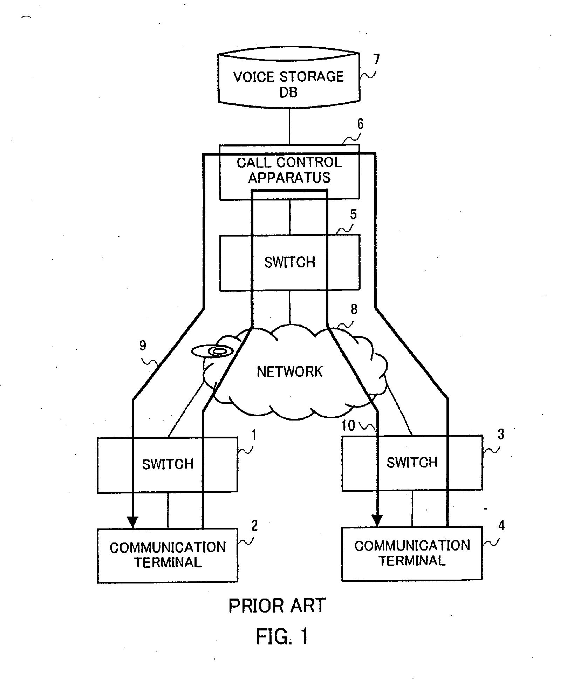

Using this Internet telephone apparatus as a call control apparatus, it is possible to construct a switching system shown in FIG.1. This system includes a call control apparatus 6 provided with a voice storage database (DB) 7, communication terminals 2 an 4, a network 8 such as the Internet and LAN and switches 1, 3 and 5 to send a received packet to a destination IP address.

The switches 1, 3 and 5 compare the destination IP address of a received packet with an internal address table and send the packet to a port connected to a destination communication terminal.

The communication terminals 2 and 4 are telephone terminals such as Internet telephones or IP telephones connected to a network.

The call control apparatus 6 controls a call connection status such as BUSY" of a communication terminal connected to the network and switches between bidirectional voice data of a call between communication terminals in communication. For example, voice data from the communication terminal 2 is switched to the communication terminal 4 or on the contrary, voice data from the communication terminal 4 is switched to the communication terminal 2. Then, the bidirectional voice data is mixed and stored in the voice storage database 7.

The network 8 is the Internet, LAN (Local Area Network) or an IP network such as IP-VPN (Internet Protocol-Virtual Private Network).

The switches 1, 3 and 5 may also be apparatuses having a router function for carrying out routing according to IP addresses depending on the type of the network 8.

Reference numerals "9" and "10" in FIG. 1 denote voice paths between the communication terminals 2 and 4 when a call is connected in this switching system, the voice path 9 shows the voice path of voice data sent from the communication terminal 4, switched at the call control apparatus 6 and received by the communication terminal 2 and the voice path 10 shows the reverse voice path.

In this system, when the communication terminal 2 dials a call to the communication terminal 4 on the other end, a call connection request is sent to the call connection apparatus 6. When the call connection apparatus 6 decides that the communication terminal 4 can receive the call, it notifies the communication terminal 4 of the call connection request from the communication terminal 2. In this way, preparations necessary for the call connection are made between the communication terminal 2 and communication terminal 4, negotiation and settings about the terminal capacity such as voice codec are performed and then the call is connected, that is, a conversation can be held.

The call control apparatus 6 switches bidirectional voice data between the communication terminals 2 and 4 (see voice paths 9 and 10) allowing a conversation between the communication terminals to be held, performs voice mixing at the same time as the switching, stores the voice data of the call in the voice storage database 7 and records the call.

However, since this conventional switching system is constructed in such a way that voice paths in both directions necessarily pass through the call control apparatus 6 to realize call recording, the following problems result.

When the network 8 is a large scale network, there are many routers and switches on the network 8 from the call control apparatus 6 to the respective communication terminals 2 and 4 and it takes a considerable time until the voice data sent from the call control apparatus 6 is received by the communication terminal 2 or 4. This increases the time interval between transmission of the voice data and reception of the voice data and the conversation between the communication terminals 2 and 4 becomes unnatural such as the voice of the party on the other end being heard with a delay. Even if the network operator designs an optimal route within the network 8, such an improvement has certain limitation.

Furthermore, when the call control apparatus 6 switches voice data as described above, the number of communication terminals that can be controlled by the call control apparatus 6 decreases for reasons related to the performance (processing capacity) of the call control apparatus 6.

The US Patent Application Publication 2001/0052081 A1 discloses a communication network with a service agent element and method for providing surveillance services, wherein a communication network includes a surveillance server. Communication surveillance is established by creating duplicate bearer packets of those packets carrying the communication data, whereas the duplicate bearer packets are then routed to appropriate law enforcement agencies.

### Disclosure of Invention

It is an object of the present invention to provide a switching system and call recording method capable of carrying out call recording without producing any reception delay of communication data.

The switching system according to one aspect of the present invention is a switching system that connects a plurality of communication terminals by the medium of a call control apparatus having a call recording function through a network, each of the plurality of communication terminals comprising a generation section that generates a plurality of copies of the same voice data while a call is connected and a transmission section that transmits one of the plurality of copies of the same voice data to the communication terminal on the other end as voice data for conversation and transmits another one to the call control apparatus as voice data for call recording, and the call control apparatus comprising a notification section that notifies the plurality of communication terminals of the destination address of the voice data for call recording and a mixing/storage section that mixes and stores the voice data for call recording sent to the respective destination addresses of the plurality of communication terminals.

Another aspect of the present invention is a call recording method in a switching system that connects a plurality, of communication terminals by the medium of a call control apparatus having a call recording function through a network, comprising a notifying step of the call control apparatus notifying the plurality of communication terminals of the destination address of the voice data for call recording, a generating step of the plurality of communication terminals generating a plurality of copies of the same voice data while a call is connected, a transmitting step of the plurality of communication terminals transmitting one of the plurality of copies of the same voice data generated in the generating step to the communication terminal on the other end as voice data for conversation and transmitting another one to the call control apparatus as voice data for call recording and a mixing/storing step of the call control apparatus mixing and storing voice data for call recording sent from the plurality of communication terminals to the destination addresses.

The switching system according to a further aspect of the present invention is a switching system that connects a plurality of communication terminals by the medium of a call control apparatus having a call recording function through a network, each of the plurality of communication terminals comprising a first acquisition section that acquires a multicast address and a formation section that forms voice paths through multicasting to transmit/receive voice data to/from the communication terminal on the other end based on the acquired multicast address, the call control apparatus comprising a notification section that notifies the plurality of communication terminals of the multicast address, a second acquisition section that acquires the voice data sent from the plurality of communication terminals through the multicasting by joining the multicast and a mixing/storage section that mixes and stores the acquired voice data.

The call recording method according to a still further aspect of the present invention is a call recording method in a switching system that connects a plurality of communication terminals by the medium of a call control apparatus having a call recording function through a network, comprising a notifying step of the call control apparatus notifying the plurality of communication terminals of a multicast address, a first acquiring step of the plurality of communication terminals acquiring the multicast address notified from the call control apparatus, a forming step of the plurality of communication terminals forming voice paths through multicasting to transmit/receive voice data to/from the communication terminal on the other end based on the multicast address acquired in the first acquiring step, a second acquiring step of the call control apparatus acquiring voice data sent from each of the plurality of communication terminals through the multicasting by joining the multicasting and a mixing/storing step of the call control apparatus mixing and storing the voice data acquired by the second acquisition section.

The switching system according to a still further aspect of the present invention is a switching system that connects a plurality of communication terminals by the medium of a call control apparatus having a call recording function through a network, each of the plurality of communication terminals comprising a buffer section that temporarily stores voice data to be sent to a communication terminal on the other end while a call is connected or voice data received from the communication terminal on the other end and a transmission section that transmits the voice data stored in the buffer section after a disconnection of the connected call to the call control apparatus as voice data for call recording, the call control apparatus comprising a notification section that notifies the plurality of communication terminals of the destination address of voice data for call recording and the communication terminal address which is the destination of the voice data for conversation and a mixing/storage section that mixes and stores the voice data for call recording sent from the plurality of communication terminals to the destination address.

The call recording method according to a still further aspect of the present invention is a call recording method in a switching system that connects a plurality of communication terminals by the medium of a call control apparatus having a call recording function through a network, comprising a notifying step of the call control apparatus notifying the plurality of communication terminals of the destination address of voice data for call recording and the communication terminal address which is the destination of the voice data for conversation, a storing step of the plurality of communication terminals temporarily storing the voice data to be sent to the communication terminal on the other end while a call is connected or voice data received from the communication terminal on the other end in a buffer section, a transmitting step of the plurality of communication terminals transmitting the voice data stored in the buffer section in the storing step after a disconnection of the connected call to the call control apparatus as voice data for call recording, a mixing/storing step of the call control apparatus mixing and storing the voice data for call recording sent from the plurality of communication terminals to the respective destination addresses.

The switching system according to a still further aspect of the present invention is a switching system that connects a plurality of communication terminals by the medium of a call control apparatus having a call recording function through a network, each of the plurality of communication terminals comprising a buffer section that temporarily stores voice data to be sent to a communication terminal on the other end while a call is connected or voice data received from the communication terminal on the other end, a mixing section that mixes the voice data stored in the buffer section after a disconnection of the connected call and a transmission section that transmits the mixed voice data to the call control apparatus as voice data for call recording, the call control apparatus comprising a notification section that notifies one of the plurality of communication terminals of the destination address of voice data for call recording and the communication terminal address which is the destination of the voice data for conversation and a storage section that stores the voice data for call recording sent from the one of the plurality of communication terminals to the destination address.

The call recording method according to a still further aspect of the present invention is a call recording method in a switching system that connects a plurality of communication terminals by the medium of a call control apparatus having a call recording function through a network, comprising a notifying step of the call control apparatus notifying one of the plurality of communication terminals of the destination address of voice data for call recording and the communication terminal address which is the destination of the voice data for conversation, a storing step of one of the plurality of communication terminals temporarily storing the voice data to be sent to the communication terminal on the other end while a call is connected and voice data received from the communication terminal on the other end in a buffer section, a mixing step of the one of the plurality of communication terminals mixing the voice data stored in the buffer section after a disconnection of the connected call, a transmitting step of the one of the plurality of communication terminals transmitting the voice datamixed in the mixing step to the call control apparatus as voice data for call recording and a storing step of the call control apparatus storing the voice data for call recording sent from one of the plurality of communication terminals to the destination address.

### Brief Description of Drawings

FIG.1 illustrates voice paths in a conventional switching system;
FIG.2 is a block diagram of a switching system according to Embodiment 1 of the present invention;
FIG.3 illustrates an address control table according to Embodiment 1 of the present invention;
FIG. 4 illustrates a table stored in a user data voice storage database according to Embodiment 1 of the present invention;
FIG.5 illustrates a sequence diagram showing operations of the switching system according to Embodiment 1 of the present invention;
FIG. 6A illustrates a data structure of a connection request message according to Embodiment 1 of the present invention;
FIG. 6B illustrates a data structure of a connection response message according to Embodiment 1 of the present invention;
FIG.7 illustrates voice paths of the switching system according to Embodiment 1 of the present invention;
FIG.8 illustrates a block diagram of a switching system according to Embodiment 2 of the present invention;
FIG. 9 illustrates a multicast address control table according to Embodiment 2 of the present invention;
FIG.10 illustrates a table stored in a user data voice storage database according to Embodiment 2 of the present invention;
FIG.11 is a sequence diagram illustrating operations of the switching system according to Embodiment 2 of the present invention;
FIG. 12A illustrates a data structure of a connection request message according to Embodiment 2 of the present invention;
FIG. 12B illustrates a data structure of a connection response message according to Embodiment 2 of the present invention;
FIG.13 illustrates voice paths of the switching system according to Embodiment 2 of the present invention;
FIG.14 is a block diagram of a switching system according to Embodiment 3 of the present invention;
FIG.15 is a sequence diagram showing operations of the switching system according to Embodiment 3 of the present invention;
FIG.16 illustrates voice paths of the switching system according to Embodiment 3 of the present invention;
FIG.17 illustrates a table stored in a user data voice storage database according to Embodiment 3 of the present invention;
FIG.18 is a block diagram of a switching system according to Embodiment 4 of the present invention;
FIG.19 is a sequence diagram showing operations of the switching system according to Embodiment 4 of the present invention;
FIG.20 illustrates voice paths of the switching system according to Embodiment 4 of the present invention; and
FIG.21 illustrates a table stored in a user data voice storage database according to Embodiment 4 of the present invention.

### Best Mode for Carrying out the Invention

With reference now to the attached drawings, embodiments of the present invention will be explained in detail below. The present invention is not limited to these embodiments, but can be implemented in various modes without deviating from the spirit or essential characteristic thereof.

### (Embodiment 1)

This embodiment will describe a system in which a communication terminal creates two identical voice packets, sends one to a call control apparatus and sends the other directly to a communication terminal on the other end.

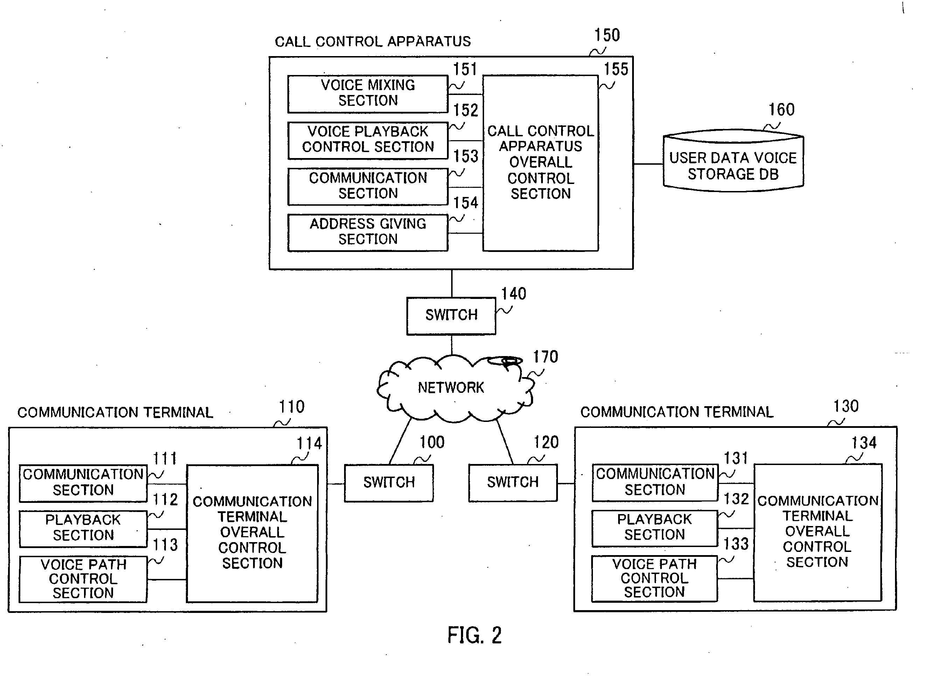

As shown in FIG.2, this switching system includes a call control apparatus 150 provided with a database which stores user data and voice (hereinafter referred to as "user data voice storage database") 160, communication terminals 110 and 130 that carry out communications through a network 170 and switches 100, 120 and 140 that send received packets according to their addresses, and the call control apparatus 150 and communication terminals 110 and 130 are connected to the network 170 through the switches 100, 120 and 140.

The switches 100, 120 and 140 compare the destination IP address of a received packet with an internal address table and send the packet to a port to which the destination communication terminal is connected.

The communication terminals 110 and 130 are provided with communication sections 111 and 131 that carry out all processing related to transmission/reception (communication) of voice data, playback section 112 and 132 that carry out all processing related to playback of voice data of a stored call, voice path control sections 113 and 133 that control the processing of creating two identical voice packets to be transmitted and transmitting the voice packets to the call control apparatus and the party on the other end and communication terminal overall control sections 114 and 134 that control the entire communication terminal.

When a call is connected and a conversation is started and when the voice path control sections 113 and 133 packetize voice data from the own communication terminals 110 and 130 and send the packetized data through the communication section 111 and 131 over the network, the voice path control sections 113 and 133 perform predetermined control so as to create two identical packets, send one to the call control apparatus and send the other to the communication terminal of the party on the other end.

The communication terminals 110 and 130 can be any terminals which at least incorporate a communication function capable of accessing the network and may be a personal computer (PC), Internet telephone and IP telephone, etc.

The call control apparatus 150 is provided with a voice mixing section 151 that mixes and stores packetized voice data sent from a communication terminal with which a call is connected, a voice playback control section 152 that controls playback processing of voice data stored in the user data voice storage database 160 based on a playback request from the communication terminal, a communication section 153 that carries out communication processing with the communication terminal, an address giving section 154 which sets and controls addresses when the communication terminals 110 and 130 send voice data to the call control apparatus 150 and a call control apparatus overall control section 155 that controls the entire call control apparatus.

The communication section 153 processes transmission/reception of various requests (e.g., call connection request) from the communication terminal and performs communication processing such as generating voice data from a received packet and sending voice data by packetizing it.

The call control apparatus overall control section 155 controls a call connection status (busy or not) of a communication terminal which is at least connected to the network and the address of the communication terminal and when a call connection request is sent to the communication terminal, the call control apparatus overall control section 155 decides whether the connection is possible or not from the call connection status under its control and enables the connection between the communication terminals when the connection is possible.

The user data voice storage database 1.60 connected to the call control apparatus 150 stores voice data sent from the voice mixing section 151 after mixing of voice data indicating the content of a conversation and extracts the stored voice data based on an instruction from the voice playback control section 152. Furthermore, the user data voice storage database 160 controls a service registration status (e.g., information on registration/no registration of call recording) of users who use the communication terminals 110 and 130.

The network 170 is the Internet, LAN and an IP network such as IP-VPN. Furthermore, the switches 100, 120 and 140 may also be an apparatus which has at least a router function of performing routing using IP addresses according to the type of the network 170.

The functions of the communication terminals 110 and 130 and call control apparatus 150 are implemented by causing computers incorporated in these apparatuses to execute processing specified by a program.

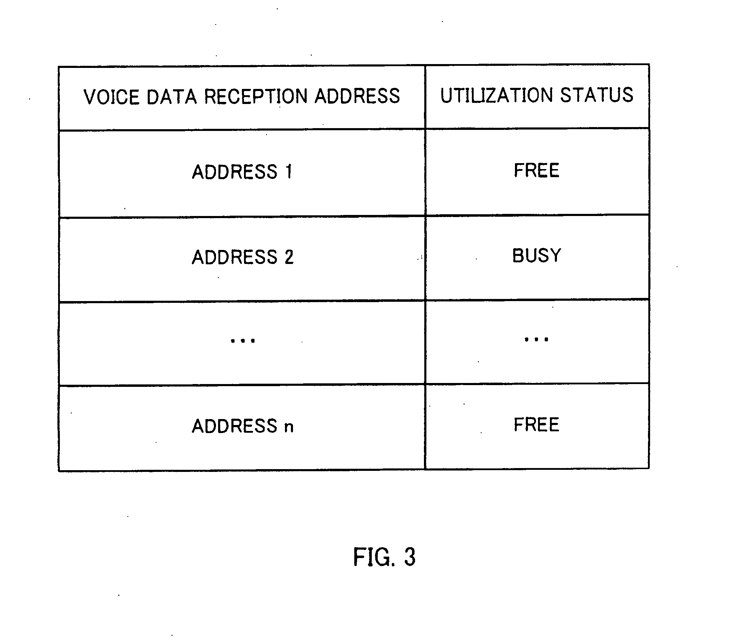

FIG.3 shows a control table (reception address control table) of reception addresses used to receive voice data from the communication terminals 110 and 130 under the control of the address giving section 154. As shown in FIG.3, this control table consists of a voice data reception addresses and their utilization statuses.

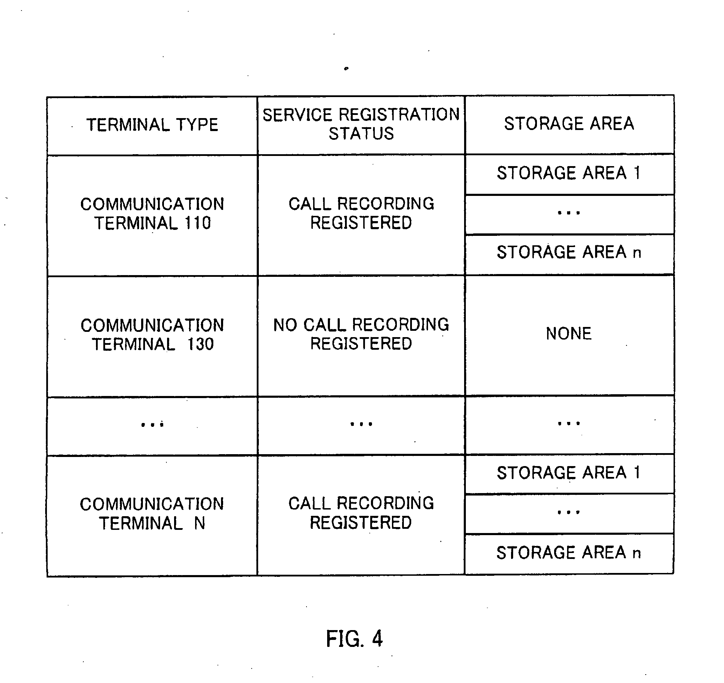

FIG.4 shows an example of contents controlled by the user data voice storage database 160. As shown in FIG. 4, this user data voice storage database 160 consists of a terminal type that indicates the type of a communication terminal connected to the call control apparatus 150 through the network 170, a service registration status that indicates the content of service registration of the user who owns the communication terminal and a storage area that stores call recordings which become effective when "CALL RECORDING REGISTERED" is registered as the service registration status.

There are a variety of methods of registering a service in the service registration status in the user data voice storage database 160; the user can set it using the communication terminal through the network 170 at any time or the user can contract it when the communication terminal is connected to the network 170 or further the operator of the network 170 can set it as appropriate.

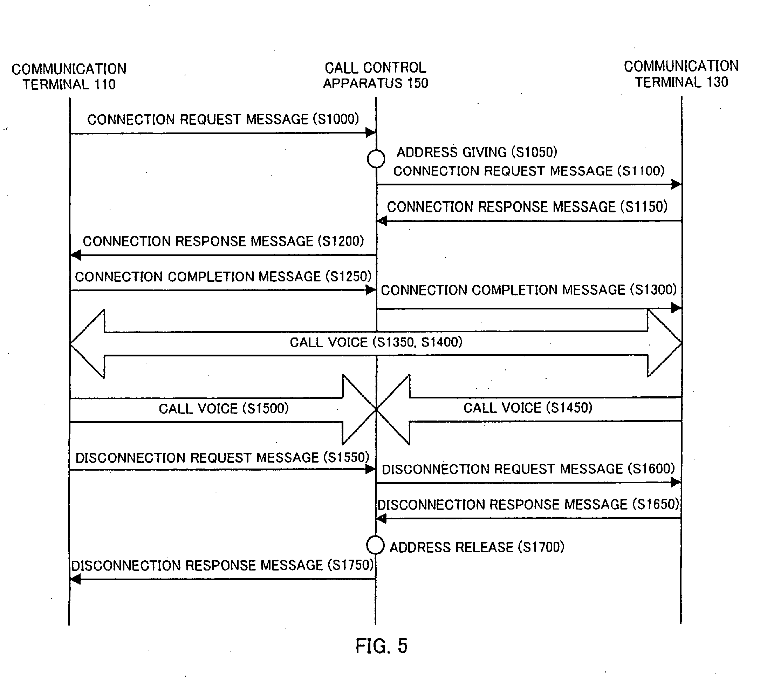

Then, the operation of the switching system in such a configuration will be explained using FIG.5.

FIG.5 shows a series of processing sequences after a call is connected from the communication terminal 110 to the communication terminal 130 using an SIP (Session Initiation Protocol) which is a protocol for setting a call using an IP telephone, the call is started when the call connection is completed until the call is disconnected.

First, the procedure after a call is connected between the communication terminals 110 and 130 until the call is recorded will be explained.

When the user inputs an address of the communication terminal 130 to which a call connection request is sent, the communication terminal 110 sets the address for transmitting/receiving voice data under the control of the communication terminal overall control section 114, creates a connection request message of the SIP including this address and the address of the communication terminal 130, sets the address of this packet in the call control apparatus 150 and sends this connection request message to the call control apparatus 150 using the communication section 111 (S1000).

Then, upon reception of the connection request message from the communication terminal 110 through the communication section 153 (S1000), the call control apparatus 150 decides whether the communication terminal 130 is connectable or not from the call connection status of the communication terminal 130 under the control of the call control apparatus overall control section 155 and analyzes the address when the communication terminal 130 is connectable.

Furthermore, in the example shown in FIG.4, since the service registration status of the communication terminal 110 controlled by the user data voice storage database 160 is "CALL RECORDING REGISTERED, " the address giving section 154 extracts the address used when the communication terminal sends voice data to the call control apparatus 150 from among "FREE" addresses in the reception address control table in FIG.3 and changes the address status to "BUSY" in the reception address control table.

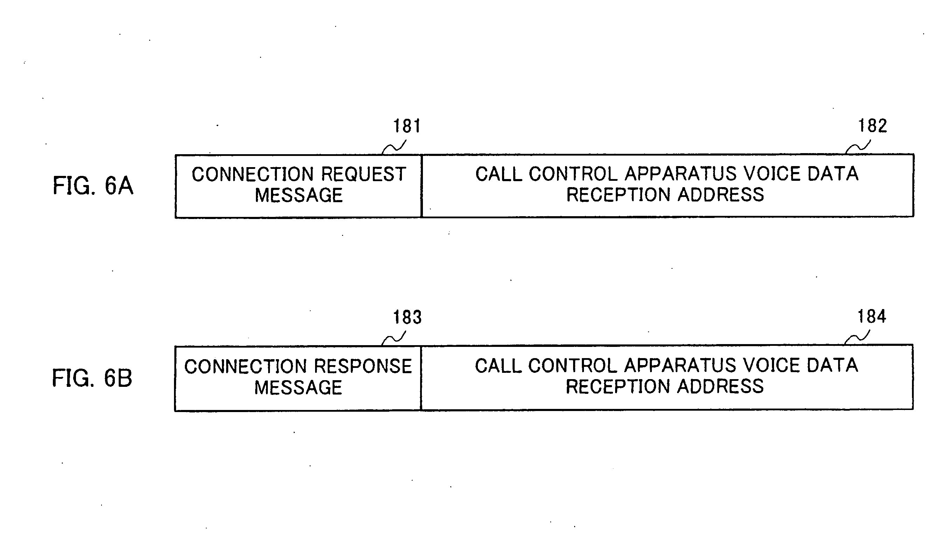

Furthermore, the call control apparatus 150 changes the destination of the connection request message received from the communication terminal 110 under the control of the call control apparatus overall control section 155 to the communication terminal 130, adds the address extracted by the address giving section 154 after the area 181 in which the connection request message is described as shown in FIG. 6A (S1050), creates a connection request message and sends this message to the communication terminal 130 through the communication section 153 (S1100).

Then, upon reception of the connection request message from the call control apparatus 150 through the communication section 131 (S1100), the communication terminal 130 performs processing such as setting of voice codec and setting of a voice data destination address in the communication terminal 110 set in the received connection request message and setting of a voice data destination address to the call control apparatus 150 in the voice path control section 133 as a preparation for starting a call connection under the control of the communication terminal overall control section 134.

Then, the communication terminal 130 sets an address to receive voice data from the communication terminal 110 under the control of the communication terminal overall control section 134, creates a connection response message including this address, designates the call control apparatus 150 as this destination and sends this connection response message to the call control apparatus 150 using the communication section 131 (S1150).

Then, upon reception of the connection response message from the communication terminal 130 using the communication section 153 (S1150), the call control apparatus 150 sets a port, etc., as a preparation for enabling reception of voice data from the communication terminal under the control of the call control apparatus overall control section 155. Then the call control apparatus 150 changes the destination of the connection responsemessage received from the communication terminal 130 to the communication terminal 110, adds the address extracted from the reception address control table in FIG.3 by the address giving section 154 after the area 183 in which the connection response message is described as shown in FIG. 6B to thereby create a connection response message and sends this message to the communication terminal 110 using the communication section 153 (S1200) .

Then, upon reception of the connection response message from the call control apparatus 150 through the communication section 111 (S1200), the communication terminal 110 performs processing such as setting of voice codec, setting the voice data destination address to the communication terminal 130 set in the received connection response message and the voice data destination address to the call control apparatus 150 in the voice path control section 113 as a preparation for starting a call connection under the control of the communication terminal overall control section 114 as in the case of the communication terminal 130. Then, the communication terminal 110 creates a connection completion message directed to the call control apparatus 150 and sends the message to the call control apparatus 150 using the communication section 111 (S1250).

Then, upon reception of the connection completion message from the communication terminal 110 through the communication section 153 (S1250), the call control apparatus 150 creates a connection completion message with the destination of the received connection completion message changed to the communication terminal 130 under the control of the call control apparatus overall control section 155 and sends the message to the communication terminal 130 using the communication section 153 (S1300).

Then, when the communication terminal 130 receives this connection completion message (S1300), the call connection is completed.

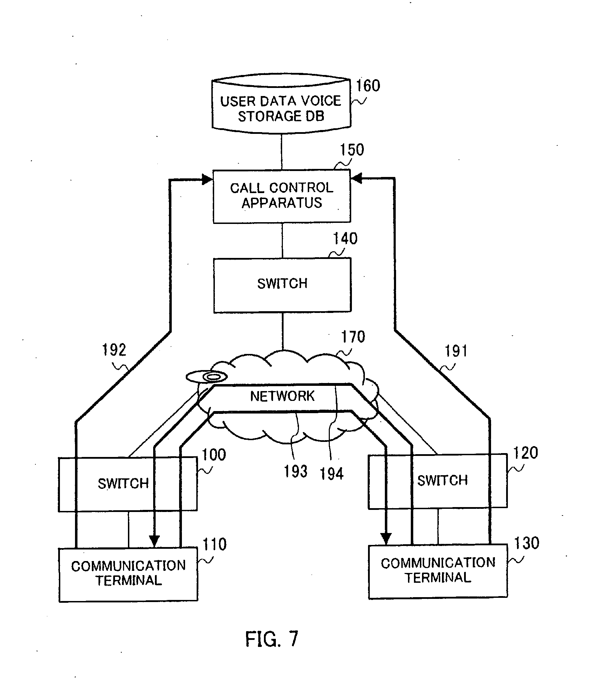

In such a sequence from S1000 to S1300, the call connection between the communication terminal 110 and communication terminal 130 is established and four voice paths 191, 192, 193 and 194 are formed as shown in FIG.7. The voice path 191 is a voice path from the communication terminal 130 to the call control apparatus 150, the voice path 192 is a voice path from the communication terminal 110 to the call control apparatus 150, the voice path 193 is a voice path from the communication terminal 110 to the communication terminal 130 and the voice path 194 is a voice path from the communication terminal 130 to the communication terminal 110.

That is, in the processing of packetizing voice data when voice data of the own terminal is sent over the network using the communication section 111, the communication terminal 110 creates two identical packets using the voice path control section 113, sends one to the address of the communication terminal 130 notified with a connection response message from the call control apparatus 150 to the communication terminal 110 through the voice path 193 and sends the other to the address of the call control apparatus 150 through the voice path 192.

Likewise, the communication terminal 130 also creates two identical packets of voice data using the voice path control section 133, sends one to the address of the communication terminal 110 notified with a connection request message from the call control apparatus 150 to the communication terminal 130 through the voice path 194 and sends the other to the address of the call control apparatus 150 through the voice path 191.

The call control apparatus 150 uses the same address to be used for the voice paths 191 and 192 and distinguishes the voice data sent from the communication terminal 110 from the voice data sent from the communication terminal 130 based on the data of the sender of the header in the packet.

Furthermore, in FIG.5, direct call processing between the communication terminal 110 and communication terminal 130 is represented by S1350 and S1400, voice data transmission processing from the communication terminal 110 to the call control apparatus 150 is represented by S1500 and voice data transmission processing from the communication terminal 130 to the call control apparatus 150 is represented by S1450.

Furthermore, while the call control apparatus 150 is receiving voice data from the communication terminals 110 and 130 using the communication section 153, that is, for a time until the call of the communication terminal 110 or 130 is disconnected, the call control apparatus 150 performs voice mixing processing on the voice data from the communication terminal 110 of "CALL RECORDING REGISTERED" using the voice mixing section 151 under the control of the call control apparatus overall control section 155 and stores the mixing data in a storage area of the communication terminal 110 in the user data voice storage database 160.

Then, the procedure until the call between the communication terminals 110 and 130 is disconnected will be explained.

Under the control of the communication terminal overall control section 114, triggered by an on-hook operation by the user, etc., the communication terminal 110 clears the voice data destination address of the communication terminal 130 set in the voice path control section 113 and the voice data destination address of the call control apparatus 150, etc., as a preparation for disconnecting the call being connected. Then, the communication terminal 110 creates a disconnection request message directed to the call control apparatus 150 and sends it to the call control apparatus 150 using the communication section 111 (S1550).

Then, upon reception of the disconnection request message from the communication terminal 110 through the communication section 153 (S1550), the call control apparatus 150 changes the destination of the received disconnection request message to the communication terminal 130 under the control of the call control apparatus overall control section 155 and sends this disconnection request message to the communication terminal 130 using the communication section 153 (S1600) .

Then, upon reception of the disconnection request message from the call control apparatus 150 through the communication section 131 (S1600), under the control of the communication terminal overall control section 134, the communication terminal 130 clears the voice data destination address of the communication terminal 110 set in the voice path control section 133 and the voice data destination address of the call control apparatus 150, etc., as a preparation for disconnecting the call being connected. Then, the communication terminal 130 creates a disconnection response message directed to the call control apparatus 150 and sends the message to the call control apparatus 150 using the communication section 131 (S1650).

Then, upon reception of the disconnection response message from the communication terminal 130 through the communication section 153 (S1650), under the control of call control apparatus overall control section 155, the call control apparatus 150 changes the destination of the received disconnection response message to the communication terminal 110 and sends this disconnection response message to the communication terminal 110 using the communication section 153 (S1750). Furthermore, at this time, the address giving section 154 changes the addresses set for the voice paths 191 and 192 in the reception address control table (see FIG.3) from "BUSY" to "FREE" (address release) (S1700).

Then, the communication terminal 110 receives the disconnection response message from the call control apparatus 150 through the communication section 111 (S1750).

According to such a sequence from S1550 to S1750, the call between the communication terminals 110 and 130 is disconnected and at the same time, the voice data directed to the call control apparatus 150 of both the communication terminals 110 and 130 is no longer sent and the call control apparatus 150 stops the call recording.

Finally, the procedure for playbacking the voice data stored in the user data voice storage database 160 will be explained (not shown).

In the case where the voice data stored in the user data voice storage database 160 is playbacked, when the user keys in data from the playback section 112, that is, makes a PB (Push Button) entry, this triggers the communication terminal 110 to create a playback request message in which the own terminal address for receiving the stored voice data is set under the control of the communication terminal overall control section 114 and send the message to the call control apparatus 150 using the communication section 111.

Then, upon reception of the playback request message from the communication terminal 110 using the communication section 153, under the control of the call control apparatus overall control section 155, the call control apparatus 150 extracts the voice data from the storage area (see FIG.4) in the user data voice storage database 160 of the communication terminal 110 which sent the playback request using the voice playback control section 152 and sends the voice data to the communication terminal 110 using the communication section 153.

Then, upon reception of the voice data from the call control apparatus 150 through the communication section 111, the communication terminal 110 playbacks the received voice data using the playback section 112 under the control of the communication terminal overall control section 114.

As shown above, when the communication terminal 110 (or 130) transmits the voice data of the own terminal over the network while a call is connected, the switching system of this embodiment provides the voice path control sections 113 and 133 that create two identical voice packets, send one to the call control apparatus 150 and the other directly to the communication terminal 130 (or 110) on the other end, provides the call control apparatus 150 with the voice mixing section 151 that mixes the voice data sent to the own address and stores the voice data in the user data voice storage database 160, and can thereby realize call recording.

This allows voice data of a communication terminal with which a call is connected to be sent directly to another communication terminal on the other end without passing through the call control apparatus, shortens the time interval between transmission of voice data and reception of the voice data and increases the number of communication terminals controllable by the call control apparatus compared to the case where the call control apparatus is involved in transmission/reception of voice data between the communication terminals.

This embodiment assumes as a precondition that negotiation information is exchanged to perform bidirectional communication such as voice codec with a connection message for a call connection.

Furthermore, for the method of voice mixing at the voice mixing section 151 of the call control apparatus 150, an existing technology can be used.

Furthermore, the configuration of this embodiment can be changed in various ways.

That is, in this embodiment, each communication terminal and call control apparatus are connected to the network through independent switches, but of the communication terminals and call control apparatus a plurality of apparatuses may also be connected to the network through the same switch.

Furthermore, this embodiment has described the case where the protocol used for a call connection is an SIP, but the operation of this embodiment is also possible using other protocols.

Furthermore, this embodiment has been explained assuming that timing to start call recording is registered in the call control apparatus beforehand, but this embodiment can also be adapted in such a way that the user who uses a communication terminal carrying out transmission/reception of voice data while a call is connected starts call recording by means of key input, etc., during the call as required and terminates the call recording before the call is disconnected using a similar method.

Furthermore, this embodiment has described the case where when the service registration status of the communication terminal 110 is "CALL RECORDING REGISTERED," voice data after voice mixing is stored in the storage area of the communication terminal 100, but this embodiment is not limited to this and when, for example, both the service registration statuses of the communication terminals 110 and 130 are "CALL RECORDING REGISTERED," it is possible to store the voice data after voice mixing in the storage area of one communication terminal in the user data voice storage database and a duplicate of the data in the storage area of the other communication terminal.

### (Embodiment 2)

This embodiment will describe a switching system in which a call between communication terminals is carried out through a multicast voice path and a call control apparatus acquires the call voice from this multicast voice path and records the call voice. The multicast is broadcasting among some communication terminals connected to a LAN or the Internet and broadcasting is applied to only communication terminals joining a multicast group.

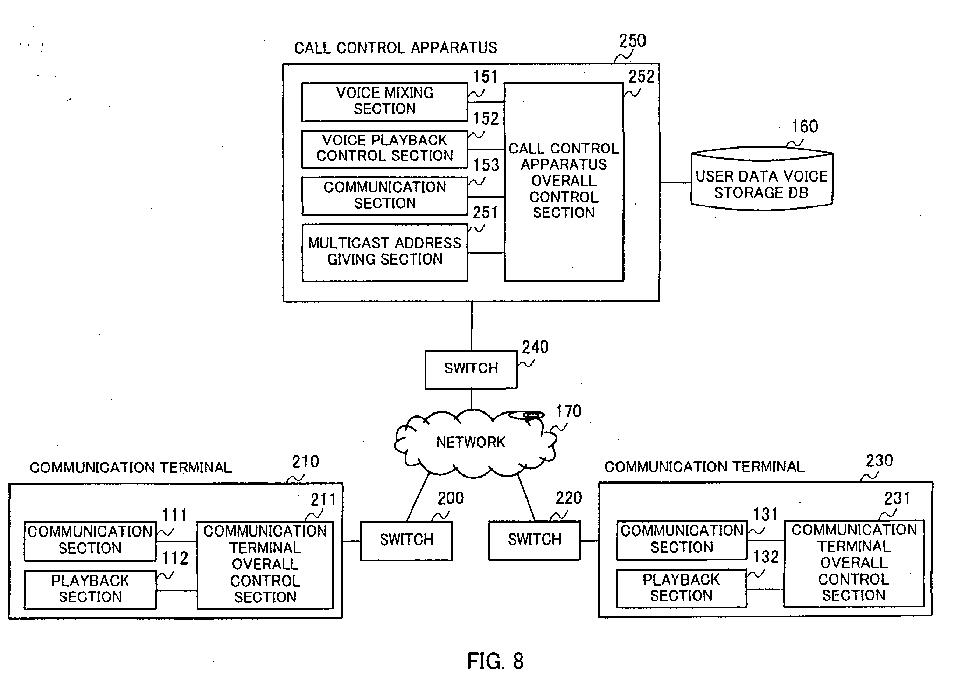

FIG.8 shows a switching system of this embodiment. Communication terminals 210 and 230 correspond to the communication terminals 110 and 130 according to Embodiment 1 shown in FIG.2 with the voice path control sections removed. Furthermore, a call control apparatus 250 is provided with a multicast address giving section 251 instead of the address giving section 154 in Embodiment 1 shown in FIG.2, which sets a multicast address for calls between the communication terminals 210 and 230 and controls the multicast address so as to be used for call recording. Furthermore, switches 200, 220 and 240 are switches applicable to multicast. The rest of the configuration is the same as that in Embodiment 1 (see FIG.2) .

The functions of the communication terminals 210 and 230 and call control apparatus 250 are implemented by causing computers incorporated in these apparatuses to execute processing specified by a program.

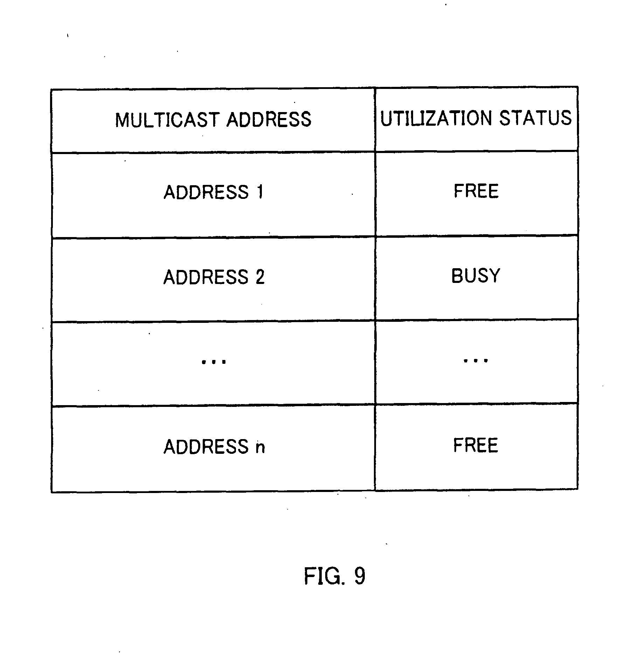

FIG.9 shows a multicast address control table controlled by the multicast address giving section 251. As shown in FIG. 9, this control table describes a multicast address used for calls between the communication terminals 210 and 230 and their utilization statuses.

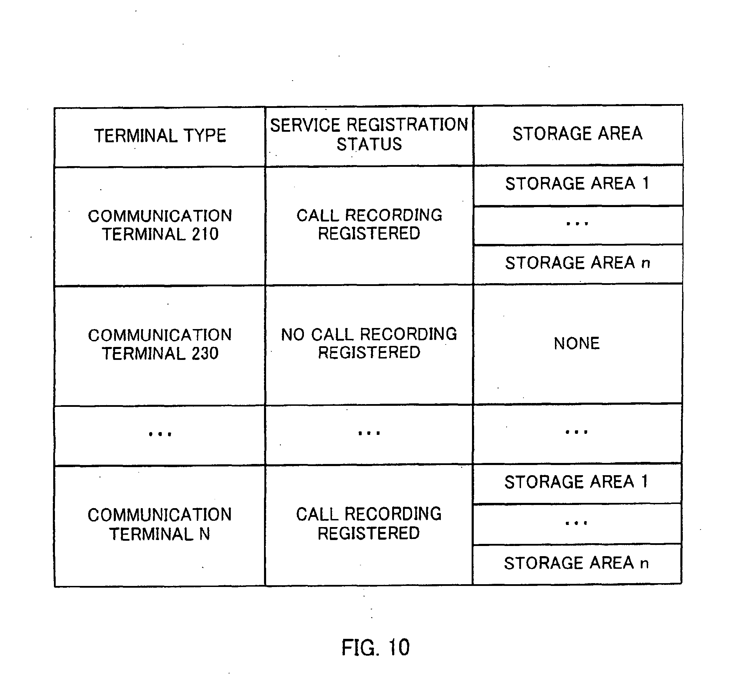

A user data voice storage database 160 stores the content shown in FIG.10 as in the case of Embodiment 1 (see FIG.4).

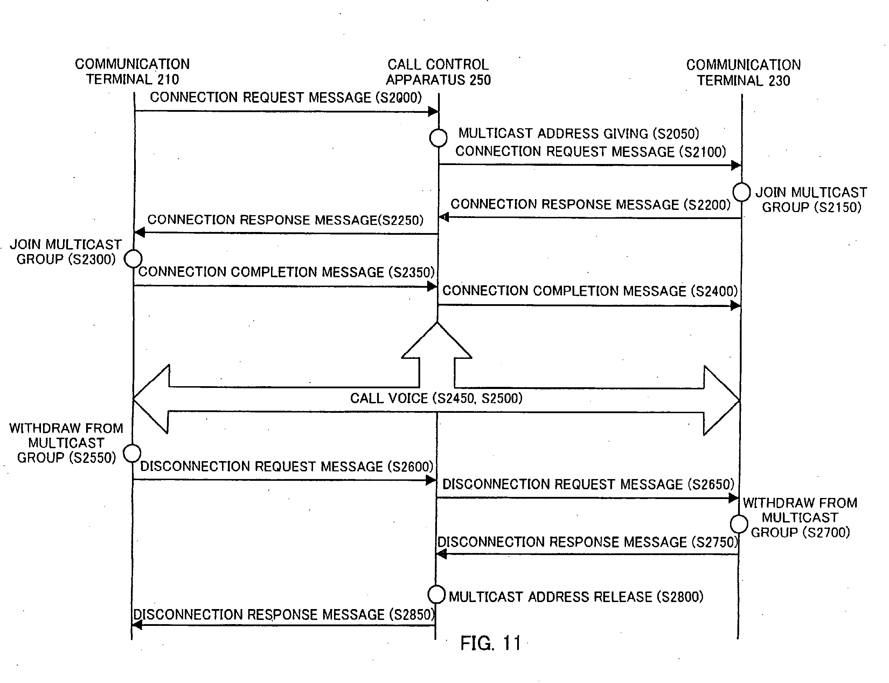

Then, the operation of the switching system in the above configuration will be explained using FIG.11.

FIG.11 shows a series of processing sequences after a call is connected from the communication terminal 210 to the communication terminal 230 using an SIP, the call is started when the call connection is completed until the call is disconnected.

First, the procedure after a call is connected between the communication terminals 210 and 230 until the call is recorded will be explained.

When the user inputs an address of the communication terminal 230 to which a call connection request is sent, under the control of a communication terminal overall control section 211, the communication terminal 210 creates a connection request message directed to the call control apparatus 250 and sends this connection request message to the call control apparatus 250 using a communication section 111 (S2000).

Then, upon reception of the connection request message from the communication terminal 210 through a communication section 153 (S2000), the call control apparatus 250 decides whether the communication terminal 230 is connectable or not from the call connection status of the communication terminal 230 under the control of a call control apparatus overall control section 252 and analyzes the address when the communication terminal 230 is connectable.

Furthermore, in the example shown in FIG.10, since the service registration status of the communication terminal 210 controlled by the user data voice storage database 160 is "CALL RECORDING REGISTERED," the multicast address giving section 251 selects and extracts the multicast address used by the communication terminal for a call from among "FREE" addresses in the multicast address control table in FIG.9 and changes the address status to "BUSY" in the multicast address control table.

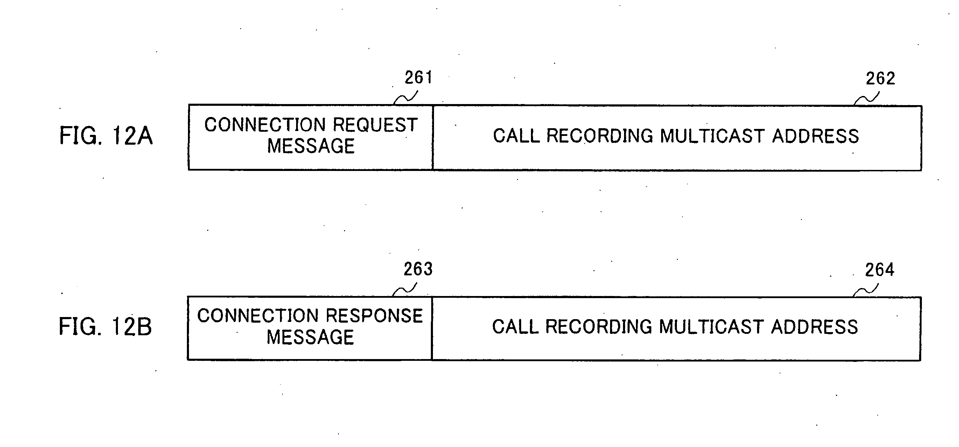

Furthermore, the call control apparatus 250 changes the destination of the connection request message received from the communication terminal 210 under the control of the call control apparatus overall control section 252 to the communication terminal 230, adds the multicast address to an area 262 after an area 261 in which the connection request message is described as shown in FIG.12A (S2050), creates a connection request message and sends this message to the communication terminal 230 through the communication section 153 (S2100). Furthermore, the call control apparatus 250 joins a multicast group indicated by the multicast address.

Then, upon reception of the connection request message from the call control apparatus 250 through the communication section 131 (S2100), the communication terminal 230 performs processing such as setting of voice codec, setting of the multicast address set in the received connection request message and processing of joining the multicast group (S2150) as a preparation for starting a call connection under the control of a communication terminal overall control section 231. This multicast address becomes the address of the communication terminal 210 to which the voice data is to be sent and the address of the call control apparatus 250 to which the voice data is to be sent.

Then, the communication terminal 230 creates a connection response message directed to the call control apparatus 250 under the control of the communication terminal overall control section 231 and sends this connection response message to the call control apparatus 250 using the communication section 131 (S2200).

Then, upon reception of the connection response message from the communication terminal 230 using the communication section 153 (S2200), the call control apparatus 250 sets a port, etc., as a preparation for enabling the voice data from the communication terminal to be received under the control of the call control apparatus overall control section 252. Then, the call control apparatus 250 changes the destination of the connection response message received from the communication terminal 230 to the communication terminal 210, the multicast address giving section 251 adds the multicast address extracted from the multicast address control table in FIG.9 after an area 263 in which the connection response message is described as shown in FIG.12B to thereby create a connection response message and sends this message to the communication terminal 210 using the communication section 153 (S2250).

Then, upon reception of the connection response message from the call control apparatus 250 through the communication section 111 (S2250), the communication terminal 210 performs processing such as setting of voice codec, setting of the multicast address set in the received connection request message as the address of the communication terminal 230 to which the voice data is to be sent and the address of the call control apparatus 250 to which the voice data is to be sent and processing of joining a multicast group (S2300) as a preparation for starting a call connection under the control of the communication terminal overall control section 211 as in the case of the communication terminal 230. Then, the communication terminal 210 creates a connection completionmessage directed to the call control apparatus 250 and sends the message to the call control apparatus 250 using the communication section 111 (S2350).

Then, upon reception of the connection completion message from the communication terminal 210 through the communication section 153 (S2350), the call control apparatus 250 creates a connection completion message with the destination of the received connection completion message changed to the communication terminal 230 under the control of the call control apparatus overall control section 252 and sends the message to the communication terminal 230 using the communication section 153 (S2400).

Then, when the communication terminal 230 receives this connection completion message (S2400), the call connection is completed.

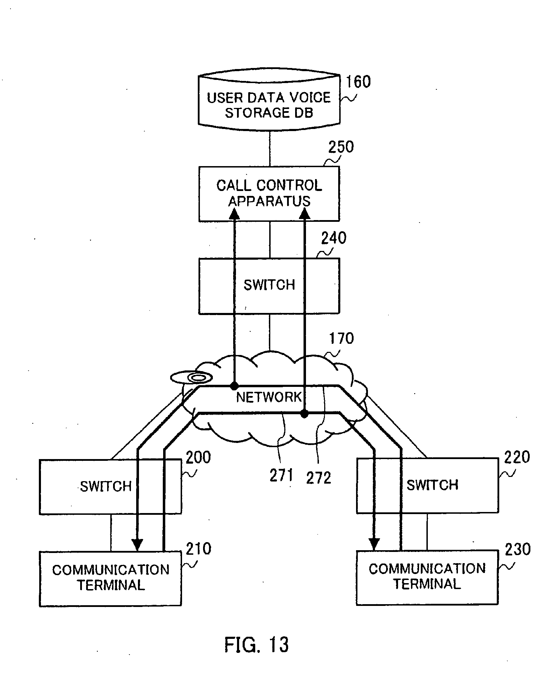

In such a sequence of S2000 to S2400, the call connection between the communication terminal 210 and communication terminal 230 is established and multicast voice paths 271 and 272 are formed as shown in FIG.13. FIG.11 shows the call processing through the multicast voice paths 271 and 272 as S2450 and S2500.

Furthermore, while the call control apparatus 250 is receiving voice data sent from the communication terminals 210 and 230 through the communication section 153 using a multicast address, that is, for a time until the calls of the communication terminals 210 and 230 are disconnected, the call control apparatus 250 performs voice mixing processing on the voice data from the communication terminal 210 which is in a status "CALL RECORDING REGISTERED" under the control of the call control apparatus overall control section 252 using the voice mixing section 151 and stores the mixing data in a storage area of the communication terminal 210 in the user data voice storage database 160.

Then, the procedure until the connection between the communication terminals 210 and 230 is disconnected will be explained.

Under the control of the communication terminal overall control section 211, triggered by an on-hook operation by the user, etc., the communication terminal 210, for example, withdraws from the multicast group (S2550) as a preparation for disconnecting the call being connected. Then, the communication terminal 210 creates a disconnection request message directed to the call control apparatus 250 and sends it to the call control apparatus 250 using the communication section 111 (S2660) .

Then, upon reception of the disconnection request message from the communication terminal 210 through the communication section 153 (S2600), the call control apparatus 250 changes the address of the received disconnection request message to the communication terminal 230 under the control of the call control apparatus overall control section 252 and sends this disconnection request message to the communication terminal 230 using the communication section 153 (S2650).

Then, upon reception of the disconnection request message from the call control apparatus 250 through the communication section 131 (S2650), under the control of the communication terminal overall control section 231, the communication terminal 230, for example, withdraws from the multicast group (S2700) as a preparation for disconnecting the call being connected. Then, the communication terminal 230 creates a disconnection response message directed to the call control apparatus 250 and sends the message to the call control apparatus 250 using the communication section 153 (S2750).

Then, upon reception of the disconnection response message from the communication terminal 230 through the communication section 153 (S2750), under the control of call control apparatus overall control section 252, the call control apparatus 250 changes the destination of the received disconnection response message to the communication terminal 210 and sends this disconnection response message to the communication terminal 210 using the communication section 153 (S2850). Furthermore, at this time, the multicast address giving section 251 changes the multicast address acquired from the multicast address control table (see FIG.9) from "BUSY" to "FREE" (address release) (S2800) and the call control apparatus 250 withdraws from the multicast group.

Then, the communication terminal 210 receives the disconnection response message from the call control apparatus 250 through the communication section 111 (S2850).

According to such a sequence from S2600 to S2850, the call between the communication terminals 210 and 230 is disconnected and at the same time, the voice data directed to the call control apparatus 250 of both the communication terminals 210 and 230 is no longer sent and the call control apparatus 250 stops the call recording.

Here, the series of processes of playbacking voice data stored in the user data voice storage database 160 in this switching system is the same as that in Embodiment 1.

As shown above, in the switching system of this embodiment, the call control apparatus 250 is provided with the section 251 that controls and adds a multicast address for call recording and when a call connection request is received from the communication terminal 210 (or 230), the section 251 selects a multicast address and notifies it to all the communication terminals 230 (210) involved in the call connection and the call control apparatus 250 joins the multicast group indicated by the address. While a call is connected, the communication terminal 210 (or 230) transmits all voice data using the address and the call control apparatus 250 mixes the voice packet directed to itself sent to the address and stores the voice packet in the user data voice storage database 160. Call recording is performed in this way.

This causes the voice data of the communication terminal with which the call is connected to be sent directly to the communication terminal on the other end without passing through the call control apparatus, shortens the time interval between transmission of voice data and reception of the voice data and increases the number of communication terminals controllable by the call control apparatus compared to the case where the call control apparatus is involved in transmission/reception of voice data between the communication terminals.

This embodiment has described the case where the call control apparatus specifies a multicast address to be used for both a call between communication terminals and call recording of the call control apparatus, but this embodiment can also be adapted in such a way that the communication terminal which sends a call holds an available multicast address beforehand, notifies the multicast address to the communication terminal and call control apparatus on the call receiving side to thereby realize a call between the communication terminals and its call recording or the call receiving side carries out the same procedure.

The various modifications shown in Embodiment 1 are also applicable to this embodiment.

### (Embodiment 3)

This embodiment will describe a switching system in which a communication terminal having a reception buffer directly communicates with a terminal on the other end, stores the voice data on the other end in the reception buffer and sends the voice data in the buffer to a call control apparatus after the call is disconnected and stores the voice data.

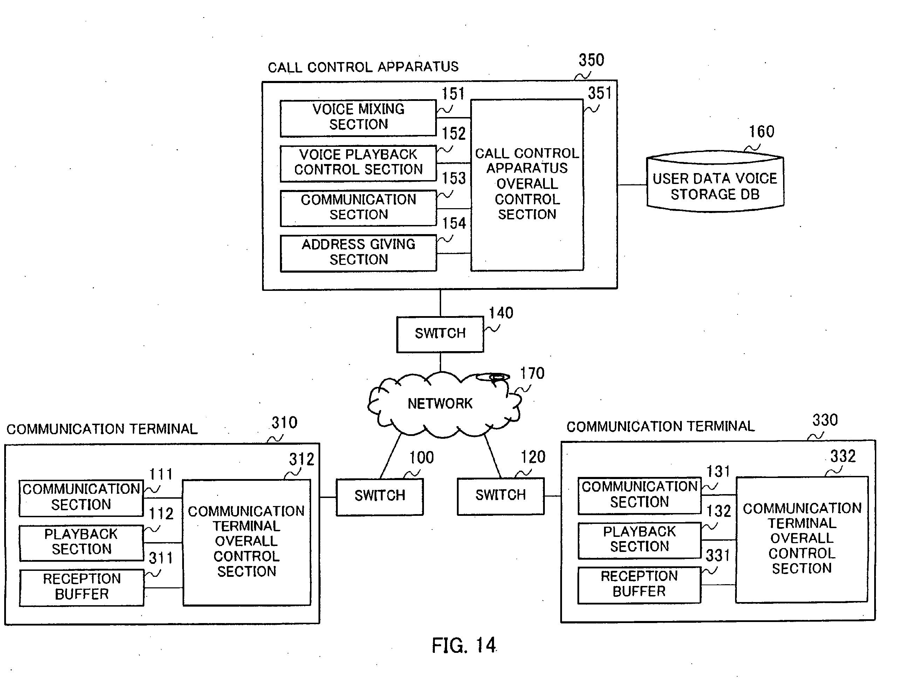

As shown in FIG.14, this switching system is provided with reception buffers 311 and 331 that temporarily store the voice data received by the communication terminals 310 and 330. The rest of the configuration is the same as that of Embodiment 1 (see FIG.2).

The functions of the communication terminals 310 and 330 and call control apparatus 350 are implemented by causing computers incorporated in these apparatuses to execute processing specified by a program.

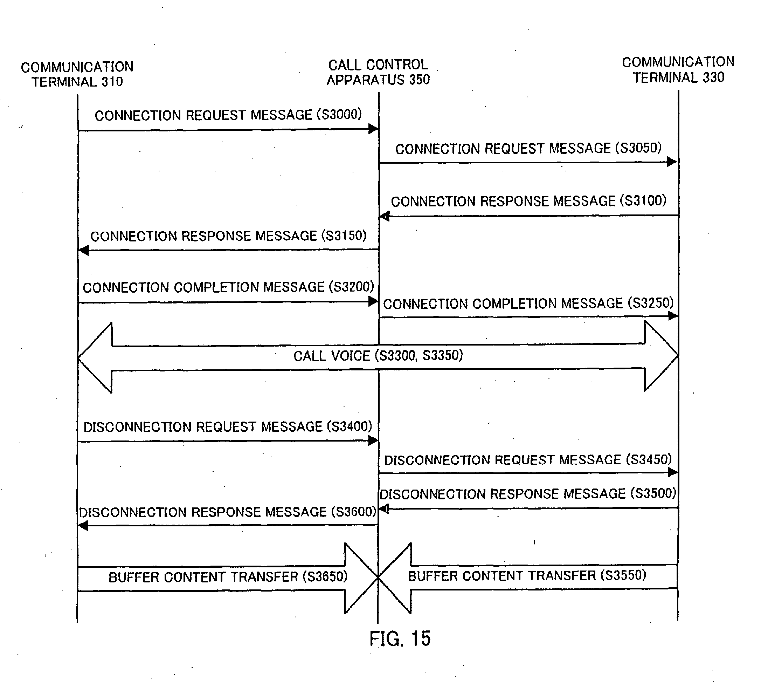

Then, the operation of this switching system will be explained using FIG.15.

FIG.15 shows a series of processing sequences after a call is connected from the communication terminal 310 to the communication terminal 330 using an SIP, the call is started when the call connection is completed until the call is disconnected.

The processing from S3000 to S3250 until a call is connected between the communication terminals 310 and 330 is the same as that from S1000 to S1300 in Embodiment 1 shown in FIG.5. However, in FIG.15, address giving processing at a call control apparatus 350 is omitted for the sake of convenience.

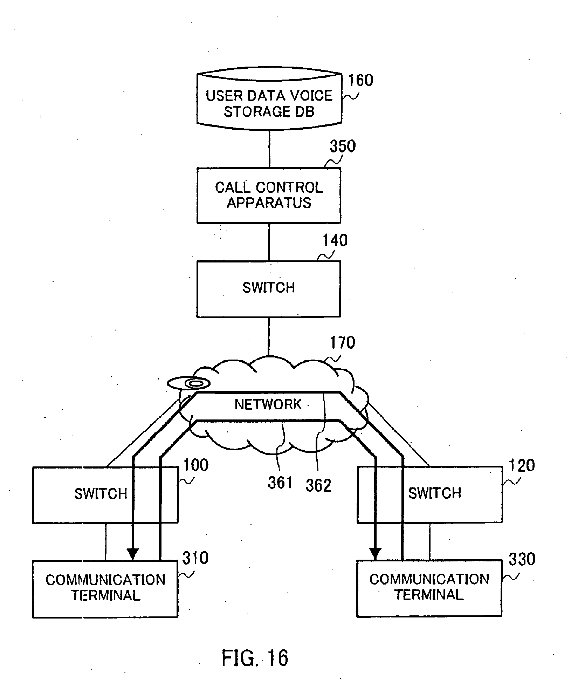

Through such a sequence from S3000 to S3250, a call connection between the communication terminal 310 and communication terminal 330 is established and two voice paths 361 and 362 are formed during a call as shown in FIG.16. The voice path 361 is a voice path from the communication terminal 310 to the communication terminal 330 and the voice path 362 is a voice path from the communication terminal 330 to the communication terminal 310. In FIG.15, call processing through the voice paths 361 and 362 are shown by S3300 and S3350.

During a call, upon reception of voice data sent from the communication terminal 330 using a communication section 111, the communication terminal 310 stores the voice data in the reception buffer 311 under the control of a communication terminal overall control section 312 and outputs the voice data to a speaker or receiver attached to the communication terminal 310. Furthermore, the communication terminal 330 also performs similar processing.

Then, the processing until a call is disconnected between the communication terminals 310 and 330 will be explained.

Under the control of the communication terminal overall control section 312, triggered by an on-hook operation by the user, etc., the communication terminal 310 prepares for a disconnection of the call being connected, creates a disconnection request message directed to the call control apparatus 350 and sends the message to the call control apparatus 350 using the communication section 111 (S3400). Then, the communication terminal 310 stops receiving voice data sent from the communication terminal 330 with which the call is connected and at the same time stops storage in the reception buffer 311.

Then, upon reception of the disconnection request message from the communication terminal 310 through a communication section 153 (S3400), under the control of a call control apparatus overall control section 351, the call control apparatus 350 creates a disconnection request message with the destination of the received disconnection request message changed to the communication terminal 330 and sends the message to the communication terminal 330 using the communication section 153 (S3450).

Then, upon reception of the disconnection request message from the call control apparatus 350 through a communication section 131 (S3450), under the control of a communication terminal overall control section 332, the communication terminal 330 prepares for a disconnection of the call being connected, creates a disconnection response message directed to the call control apparatus 350 and sends the message to the call control apparatus 350 using the communication section 131 (S3500).

Then, triggered by the transmission of the above disconnection response message from the communication section 131, the communication terminal 330 stops receiving voice data sent from the communication terminal 310 with which the call is connected and stops storage in the reception buffer 331 and at the same time sends the voice data in the reception buffer 331 using the communication section 131 directed to the address of the call control apparatus 350 notified through the connection request message in S3050 (buffer content transfer) (S3550). This transmission continues as long as voice data exists in the reception buffer 331.

Then, upon reception of the disconnection response message from the communication terminal 330 through the communication section 153 (S3500), under the control of the call control apparatus overall control section 351, the call control apparatus 350 creates a disconnection response message with the destination of the received disconnection response message changed to the communication terminal 310 and sends the message to the communication terminal 310 using the communication section 153 (S3600).

Then, triggered by the reception of the disconnection response message from the call control apparatus 350 through the communication section 111, the communication terminal 310 sends the voice data in the reception buffer 311 to the address of the call control apparatus 350 notified through the connection response message in S3150 using the communication section 111 (buffer content transfer)(S3650). This transmission continues as long as voice data exists in the reception buffer 311.

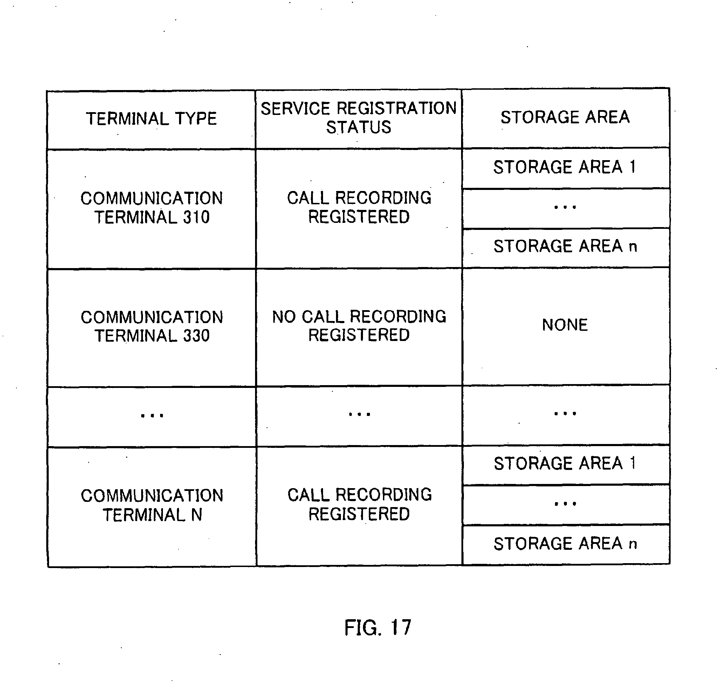

Then, when the communication section 153 starts to receive the voice data sent from the communication terminal 310 and communication terminal 330, under the control of the call control apparatus overall control section 351, the call control apparatus 350 mixes the two pieces of voice data using the voice mixing section 151 and stores voice data from the communication terminal 310 in a status, for example, "CALL RECORDING REGISTERED" as the voice data of call recording in a storage area of the communication terminal 310 in the user data voice storage database 160 (see FIG. 17) . Furthermore, when the communication section 153 confirms the stoppage of the transmission of the voice data fromboth the communication terminal 310 and communication terminal 330, the call control apparatus 350 stops the storage in the user data voice storage database 160 and uses the address giving section 154 to set the address notified to the communication terminal when the connection request message and connection response message are sent to "FREE" in the address control table in FIG.3.

Here, the series of processes of playbacking voice data stored in the user data voice storage database 160 in this switching system is the same as that in Embodiment 1.

As shown above, in the switching system of this embodiment, the communication terminals 310 and 330 are provided with the reception buffers 311 and 331 to store voice data of the terminal on the other end, the communication terminal sends the voice data of the own terminal directly to the terminal on the other end while a call is connected and stores the voice data likewise sent from the communication terminal on the other end in the reception buffer. Then, after the call is disconnected, the voice data in the reception buffers 311 and 331 of the respective communication terminals 310 and 330 is packetized and sent to the call control apparatus 350 and the call control apparatus 350 mixes the received packets and stores them in the user data voice storage database 160 to thereby realize call recording.

This allows the voice data of the communication terminal with which a call is connected to be sent directly to the communication terminal on the other end without passing through the call control apparatus, thereby shortens the time interval between transmission of voice data and reception of the voice data and increases the number of communication terminals controllable by the call control apparatus compared to the case where the call control apparatus is involved in transmission/reception of voice data between the communication terminals.

This embodiment sends the content of the reception buffer of the communication terminal to the call control apparatus triggered by a disconnection of a call, but this embodiment can be modified in many ways, for example, by sending the content of the reception buffer using the time zone corresponding to the lowest traffic of the network on the day, etc.

Furthermore, this embodiment has described the case where the reception buffer of a communication terminal stores voice data received from another terminal on the other end, but this embodiment can also be adapted so that each communication terminal stores voice data sent from the own terminal and sends this voice data to the call control apparatus after the call is disconnected.

The various modifications shown in Embodiment 1 are also applicable to this embodiment.

Furthermore, when the user who uses a communication terminal with which a call is connected keys in data during the call and sends a call recording request message to a call control apparatus and specifies the start of call recording, it is possible to notify the user of the address used in the call recording through a response message, etc., from the call control apparatus.

### (Embodiment 4)

This embodiment will describe a switching system in which a communication terminal having a reception buffer directly communicates with a terminal on the other end, stores voice data of both the terminal on the other end and the own terminal in a reception buffer, mixes the voice data in the buffer after the call is disconnected, sends the voice data to a call control apparatus to store the voice data.

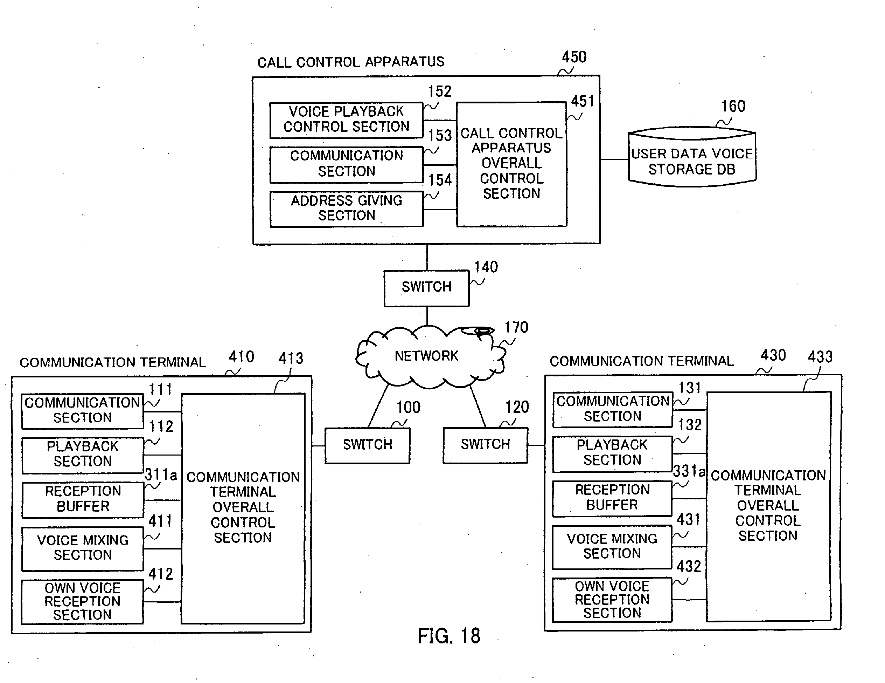

As shown in FIG. 18, this switching system is provided with voice mixing sections 411 and 431 whereby communication terminals 410 and 430 mix voice data stored in reception buffers 311a and 331a and own voice reception sections 412 and 432 that copy the voice data input by the user, store one in the reception buffers 311a and 331a and sends the other to the communication terminal on the other end with which a call is connected. A call control apparatus 450 includes no voice mixing section. The rest of the configuration is the same as that of Embodiment 3 (see FIG.14).

However, the reception buffers 311a and 331a temporarily store the voice data sent from the communication terminal on the other end while a call is connected and then received by communication sections 111 and 131 and also temporarily store a copy of the voice data sent from the own voice reception sections 412 and 432 and to be sent to the communication terminal on the other end by the own communication terminal.

The functions of the communication terminals 410 and 430 and call control apparatus 450 are implemented by causing computers incorporated in these apparatuses to execute processing specified by a program.

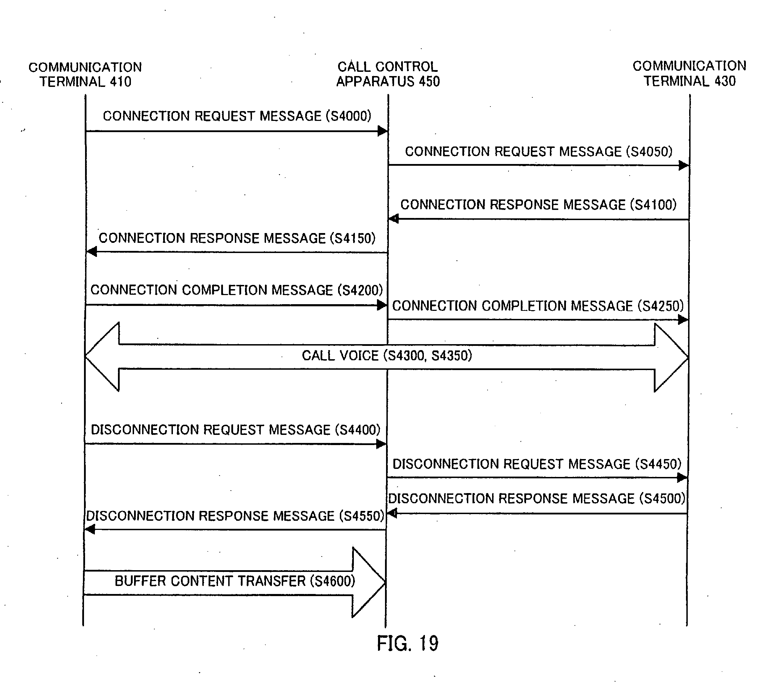

Then, the operation of this switching system will be explained using FIG.19.

FIG.19 shows a series of processing sequences after a call is connected from the communication terminal 410 to the communication terminal 430 using an SIP, the call is started when the call connection is completed until the call is disconnected.

The processing from S4000 to S4250 until a call is connected between the communication terminals 410 and 430 is substantially the same as S1000 to S1300 in Embodiment 1 shown in FIG.5 with the only difference in that a connection request message sent from the call control apparatus 450 to the communication terminal 430 in S4050 is not assigned any voice data reception address acquired from an address control table. However, a connection response message sent from the call control apparatus 450 to the communication terminal 410 in S4150 is assigned this voice data reception address. The communication terminal 410 notified of the voice data reception address stores the partner's voice data and the own voice data in the reception buffer 311a, mixes the voice data in the reception buffer 311a after the call is disconnected and sends the mixed voice data to the call control apparatus 450. However, the communication terminal 430 which is not notified of the voice data reception address does not perform such processing.

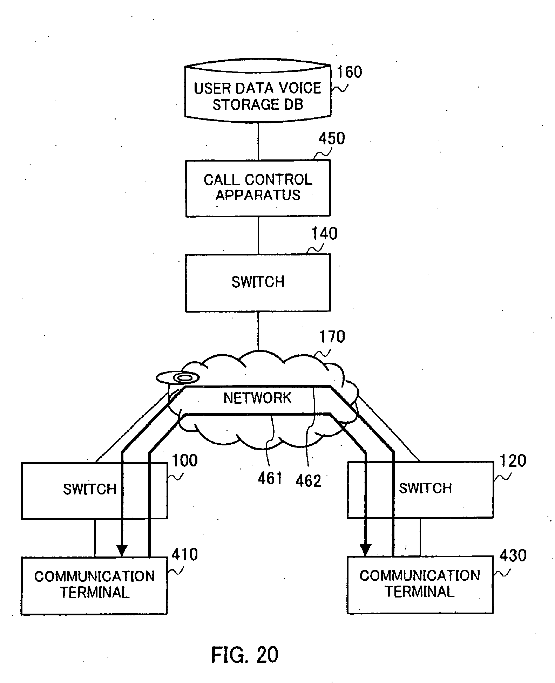

Through such a sequence from S4000 to S4250, the call connection between the communication terminal 410 and communication terminal 430 is established and two voice paths 461 and 462 are formed during the call as shown in FIG.20. The voice path 461 is a voice path from the communication terminal 410 to the communication terminal 430 and the voice path 462 is a voice path from the communication terminal 430 to the communication terminal 410. In FIG.19, call processing through the voice paths 461 and 462 is shown by S4300 and S4350.

Being notified of the address of the call control apparatus 450 through the connection response message in S4150, upon reception of voice data from the communication terminal 430 during a call, the communication terminal 410 stores the voice data received through the communication section 111 in the reception buffer 311a under the control of the communication terminal overall control section 413 and outputs the voice data to a speaker or receiver attached to the communication terminal 410.

Furthermore, when the communication terminal 410 sends the voice data of the user who uses the communication terminal 410 to the communication terminal 430, the own voice reception sections 412 and 432 copy the voice data input by the user, stores one of this voice data in the reception buffer 311a and sends the other to the communication terminal on the other end 430 using the communication section 111 through the voice path 461 under the control of the communication terminal overall control section 413.

On the other hand, the communication terminal 430 which has not been notified of the address of the call control apparatus 450 through the connection request message in S4050 does not store the voice data in the reception buffer 331a. The rest of the processing is similar to that of the communication terminal 410.

Then, the processing until the call between the communication terminals 410 and 430 is disconnected will be explained.

Under the control of the communication terminal overall control section 413, triggered by an on-hook operation by the user, etc., the communication terminal 410 prepares for a disconnection of the call being connected, creates a disconnection request message directed to the call control apparatus 450 and sends the message to the call control apparatus 450 using the communication section 111 (S4400). Then, the communication terminal 410 stops receiving the voice data sent from the communication terminal 430 with which the call is connected and at the same time stops all the storage in the reception buffer 311a.

Then, upon reception of the disconnection request message from the communication terminal 410 through a communication section 153 (S4400), under the control of a call control apparatus overall control section 451, the call control apparatus 450 changes the destination of the received disconnection request message to the communication terminal 430 and sends this message to the communication terminal 430 using the communication section 153 (S4450).

Then, upon reception of the disconnection request message from the call control apparatus 450 through the communication section 131 (S4450), under the control of the communication terminal overall control section 433, the communication terminal 430 prepares for a disconnection of the call being connected, creates a disconnection response message directed to the call control apparatus 450 and sends the message to the call control apparatus 450 using the communication section 131 (S4500).

Then, upon reception of the disconnection response message from the communication terminal 430 through the communication section 153 (S4500), under the control of the call control apparatus overall control section 451, the call control apparatus 450 creates a disconnection response message with the destination of the received disconnection response message changed to the communication terminal 410 and sends the message to the communication terminal 410 using the communication section 153 (S4550).

Then, upon reception of the disconnection response message from the call control apparatus 450 using the communication section 111, the communication terminal 410 mixes two types of voice data stored in the reception buffer 311a using the voice mixing section 411 and sends the voice data to the address of the call control apparatus 450 notified through the connection response message in S4150 using the communication section 111 (buffer content transfer) (S4600). This transmission continues as long as voice data exists in the reception buffer 311a.

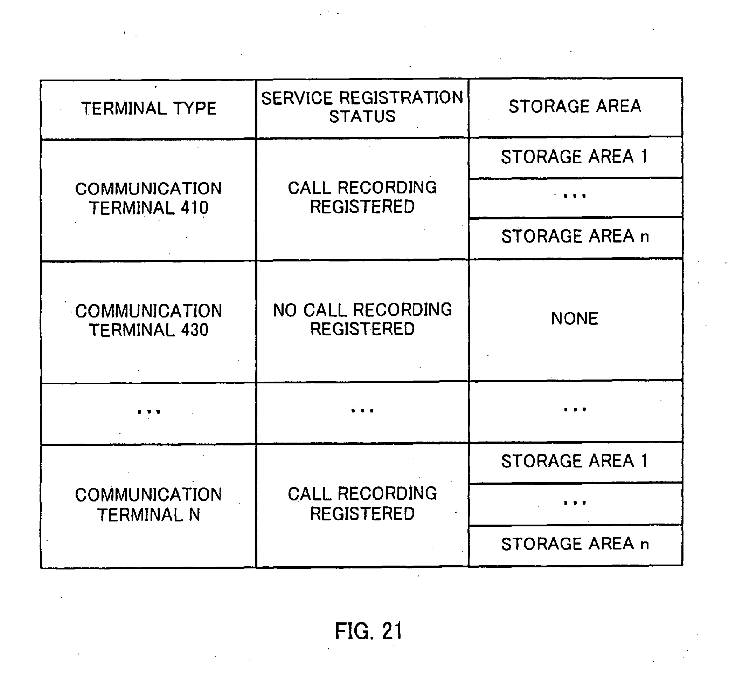

Then, when the communication section 153 starts to receive the voice data sent from the communication terminal 410, under the control of the call control apparatus overall control section 451, the call control apparatus 450 stores the voice data as the voice data of call recording in a storage area of the communication terminal 410 in the user data voice storage database 160 (see FIG.21). Furthermore, when the communication section 153 confirms the stoppage of the transmission of the voice data from the communication terminal 410, the call control apparatus 450 stops the storage in the user data voice storage database 160 and sets to "FREE" in the address control table in FIG. 3 the address notified to the communication terminal 410 when the connection response message is sent using an address giving section 154.

Here, the series of processes of playbacking voice data stored in the user data voice storage database 160 in this switching system is the same as that in Embodiment 1.

As shown above, the switching system of this embodiment provides the communication terminals 410 and 430 with the reception buffers 311a and 331a and voice mixing sections 411 and 431, stores voice data of the own terminal in the own terminal area in the reception buffer, sends the voice data directly to the terminal on the other end while a call is connected and stores the voice data sent from the communication terminal on the other end in the area for the terminal on the other end of the reception buffer. Then, after the call is disconnected, the voice data in the respective areas in the reception buffers 311a and 331a is mixed and the mixed data is packetized and sent to the call control apparatus 450. Then, the call control apparatus 450 receives the packet, stores the packet in the user data voice storage database 160 and thereby realizes call recording.

This allows the voice data of the communication terminal with which a call is connected to be sent directly to the communication terminal on the other end without passing through the call control apparatus and thereby shortens the time interval between transmission of voice data and reception of the voice data. Furthermore, the call control apparatus only needs to control the content of call recording mixed by the communication terminal and requires no processing such as voice mixing involved in call recording and thereby further increases the number of communication terminals controllable by the call control apparatus.

The various modifications shown in Embodiment 3 are also applicable to this embodiment.

As is clear from the above explanations, the switching system of the present invention can directly transmit/receive voice data between communication terminals without passing through the call control apparatus and record the content of the call through the call control apparatus. This makes it possible to reduce delays of voice data transmitted/received between the communication terminals and avoid unnatural conversations such as the voice of the party on the other end being heard with a delay.

The present invention can also reduce the burden on the call control apparatus and increase the number of communication terminals controllable by the call control apparatus.

This application is based on the Japanese Patent Application No. 2001-397265 filed on December 27, 2001.

### Industrial Applicability

The present invention is applicable to a switching system which switches voice calls, etc., carried out between communication terminals through the Internet and LAN, etc.

## Claims

1. A communication terminal (210) used in a switching system that connects a plurality of communication terminals (210, 230) by the medium of a call control apparatus (250) having a call recording function through a network (170), **characterized by**
the communication terminal (210) comprising:
an acquisition section (111) that acquires a multicast address; and
a formation section (211) that forms voice paths through multicasting to transmit/receive voice data to/from a communication terminal (230) on the other end based on the acquired multicast address

2. A call control apparatus (250) used in a switching system that connects a plurality of communication terminals (210, 230) by the medium of a call control apparatus (250) having a call recording function through a network (170), **characterized by**
the call control apparatus (250) comprising:
a notification section (251) that notifies said plurality of communication terminals of a multicast address;
an acquisition section (153) that joins multicasting to acquire voice data sent through the multicasting from each of said plurality of communication terminals; and
a mixing/storage section (151) that mixes and stores the acquired voice data.

3. A switching system that connects a plurality of communication terminals (210, 230), according to claim 1, by the medium of a call control apparatus (250), according to claim 2 having a call recording function through a network (170).

4. The switching system according to claim 3, wherein said network is an IP network and said plurality of communication terminals performs packet communication with one another through the IP network.

5. A call recording method in a switching system that connects a plurality of communication terminals by the medium of a call control apparatus having a call recording function through a network,
**characterized by**
the call recording method comprising:
a notifying step of said call control apparatus notifying said plurality of communication terminals of a multicast address;
a first acquiring step of said plurality of communication terminals acquiring the multicast address notified from said call control apparatus;
a forming step of said plurality of communication terminals each forming voice paths through multicasting to transmit/receive voice data to/from a communication terminal on the other end based on the multicast address acquired in said first acquiring step;
a second acquiring step of said call control apparatus joining the multicasting to acquire voice data sent through the multicasting from each of said plurality of communication terminals; and
a mixing/storing step of said call control apparatus mixing and storing the voice data acquired by said second acquisition section.

## Patentansprüche

1. Kommunikations-Endgerät (210), das in einem Vermittlungssystem verwendet wird, das eine Vielzahl von Kommunikations-Endgeräten (210, 230) mittels einer Gesprächsteuerungsvorrichtung (250), die über eine Gesprächaufzeichnungsfunktion verfügt, über ein Netzwerk (170) verbindet,
**dadurch gekennzeichnet, dass**
das Kommunikations-Endgerät (210) umfasst:
einen Erfassungsabschnitt (111), der eine Multicast-Adresse erfasst; und
einen Ausbildungsabschnitt (211), der Sprach-Pfade über Multicasting ausbildet, um auf Basis der erfassten Multicast-Adresse Sprachdaten zu/von einem Kommunikations-Endgerät (230) am anderen Ende zu senden/empfangen.

2. Gesprächssteuerungsvorrichtung (250), die in einem Vermittlungssystem verwendet wird, das eine Vielzahl von Kommunikations-Endgeräten (210, 230) mittels einer Gesprächssteuerungsvorrichtung (250), die über eine Gesprächsaufzeichnungsfunktion verfügt, über ein Netzwerk (170) verbindet,
**dadurch gekennzeichnet, dass**
die Gesprächssteuerungsvorrichtung (250) umfasst:
einen Mitteilungsabschnitt (251), der der Vielzahl von Kommunikations-Endgeräten eine Multicast-Adresse mitteilt;
einen Erfassungsabschnitt (153), der an Multicasting teilnimmt, um über das Multicasting gesendete Sprachdaten von jedem der Vielzahl von Kommunikations-Endgeräten zu erfassen; und
einen Misch/Speicherabschnitt (151), der die erfassten Sprachdaten mischt und speichert.

3. Vermittlungssystem, das eine Vielzahl von Kommunikations-Endgeräten (210) nach Anspruch 1 mittels einer Gesprächssteuerungsvorrichtung (250) nach Anspruch 2, die über eine Gesprächsaufzeichnungsfunktion verfügt, über ein Netzwerk (170) verbindet.

4. Vermittlungssystem nach Anspruch 3, wobei das Netzwerk ein IP-Netzwerk ist und die Vielzahl von Kommunikations-Endgeräten Paket-Kommunikation miteinander über das IP-Netzwerk durchführen.

5. Gesprächaufzeichnungsverfahren in einem Vermittlungssystem, das eine Vielzahl von Kommunikations-Endgeräten mittels einer Gesprächssteuerungsvorrichtung, die über eine Gesprächaufzeichnungsfunktion verfügt, über ein Netzwerk verbindet,
**dadurch gekennzeichnet, dass**
das Gesprächsaufzeichnungsverfahren umfasst:
einen Mitteilungsschritt, in dem die Gesprächssteuerungsvorrichtung der Vielzahl von Kommunikations-Endgeräten eine Multicast-Adresse mitteilt;
einen ersten Erfassungsschritt, in dem die Vielzahl von Kommunikations-Endgeräten die von der Gesprächssteuerungsvorrichtung mitgeteilte Multicast-Adresse erfassen;
einen Ausbildungsschritt, in dem die Vielzahl von Kommunikations-Endgeräten jeweils Sprach-Pfade über Multicasting ausbilden, um auf Basis der in dem ersten Erfassungsschritt erfassten Multicast-Adresse Sprachdaten zu/von einem Kommunikations-Endgerät am anderen Ende zu senden/empfangen;
einen zweiten Erfassungsschritt, in dem die Gesprächssteuerungsvorrichtung an dem Multicasting teilnimmt, um über das Multicasting gesendete Sprachdaten von jedem der Vielzahl von Kommunikations-Endgeräten zu erfassen; und
einen Misch/Speicherschritt, in dem die Gesprächssteuerungsvorrichtung die mit dem zweiten Erfassungsschritt erfassten Sprachdaten mischt und speichert.

## Revendications

1. Terminal de communication (210) utilisé dans un système de commutation qui relie une pluralité de terminaux de communication (210, 230) par le truchement d'un appareil de commande d'appel (250) comportant une fonction d'enregistrement d'appel au travers d'un réseau (170), **caractérisé en ce que**
le terminal de communication (210) comprend :
une section d'acquisition (111) qui acquiert une adresse de multidiffusion, et
une section de formation (211) qui forme des lignes vocales par l'intermédiaire de la multidiffusion afin d'émettre et recevoir des données vocales vers ou depuis un terminal de communication (230) situé à l'autre extrémité sur la base de l'adresse acquise de multidiffusion.

2. Appareil de commande d'appel (250) qui relie une pluralité de terminaux de communication (210, 230) par le truchement d'un appareil de commande d'appel (250) comportant une fonction d'enregistrement d'appel au travers d'un réseau (170),
**caractérisé en ce que**
l'appareil de commande d'appel (250) comprend :
une section de notification (251) qui avertit ladite pluralité de terminaux de communication d'une adresse de multidiffusion,
une section d'acquisition (153) qui connecte la multidiffusion pour acquérir des données vocales envoyées par l'intermédiaire de la multidiffusion depuis chacun de ladite pluralité de terminaux de communication, et
une section de mélange et de mémorisation (151) qui mélange et mémorise les données vocales acquises.

3. Système de commutation qui relie une pluralité de terminaux de communication (210, 230) conformes à la revendication 1 par le truchement d'un appareil de commande d'appel (250) conforme à la revendication 2 comportant une fonction d'enregistrement d'appel au travers d'un réseau (170).

4. Système de commutation selon la revendication 3, dans lequel ledit réseau est un réseau au protocole IP et ladite pluralité de terminaux de communication effectue entre l'un et l'autre une communication par paquets au travers du réseau au protocole IP.

5. Procédé d'enregistrement d'appel dans un système de communication qui relie une pluralité de terminaux de communication (210, 230) conformes à la revendication 1 par le truchement d'un appareil de commande d'appel (250) conforme à la revendication 2 comportant une fonction d'enregistrement d'appel au travers d'un réseau (170), **caractérisé en ce que**
le procédé d'enregistrement d'appel comprend :
une étape de notification dudit appareil de commande d'appel avertissant ladite pluralité de terminaux de communication d'une adresse de multidiffusion,
une première étape d'acquisition de ladite pluralité de terminaux de communication, laquelle acquiert l'adresse de multidiffusion notifiée à partir dudit appareil de commande d'appel,
une étape de formation de ladite pluralité de terminaux de communication formant chacun des lignes vocales par l'intermédiaire de la multidiffusion afin d'émettre et recevoir des données vocales vers ou depuis un terminal de communication situé à l'autre extrémité sur la base de l'adresse de multidiffusion acquise dans ladite première étape d'acquisition,
une seconde étape d'acquisition dudit appareil de commande d'appel reliant la multidiffusion afin d'acquérir des données vocales envoyées par l'intermédiaire de la multidiffusion à partir de chacun de ladite pluralité de terminaux de communication, et
une étape de mélange et de mémorisation dudit appareil de commande d'appel mélangeant et mémorisant les données vocales acquises par ladite seconde section d'acquisition.
